# EUROPÄISCHE PATENTSCHRIFT

(11) **EP 2 734 984 B1**
(45) Veröffentlichungstag und Bekanntmachung des Hinweises auf die Patenterteilung: **23.08.2023**
(21) Anmeldenummer: 12734918.1
(22) Anmeldetag: 06.07.2012
(51) Int. Cl.: G07F 7/12, G06Q 20/38

(54) **VERFAHREN ZUM SCHUTZ EINES CHIPKARTEN-TERMINALS GEGEN UNBERECHTIGTE BENUTZUNG**
METHOD FOR PROTECTING A CHIP CARD TERMINAL AGAINST UNAUTHORIZED USE
PROCÉDÉ DE PROTECTION D'UN TERMINAL DE CARTES À PUCE CONTRE UNE UTILISATION NON AUTORISÉE

(30) Priorität: 19.07.2011 DE 102011079441
(43) Veröffentlichungstag der Anmeldung: 28.05.2014
(73) Patentinhaber: Bundesdruckerei GmbH, 10969 Berlin (DE)
(72) Erfinder: WIRTH, Klaus-Dieter, 12683 Berlin (DE); SCHOLZE, Steffen, 13469Berlin (DE); SCHWAN, Matthias, 10437 Berlin (DE)
(74) Vertreter: Richardt Patentanwälte PartG mbB
(86) Internationale Anmeldenummer: PCT/EP2012/063308
(87) Internationale Veröffentlichungsnummer: WO 2013/010827

(56) Entgegenhaltungen:
- DE-B3-102007 000 589
- "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1. November 2007 (2007-11-01), XP007905525,
- ANONYMOUS: "GlobalPlatform Card Specification v2.2", GLOBALPLATFORM CARD SPECIFICATION V2, 2 March 2006 (2006-03-02), XP055401744,
- Wolfgang Rankl ET AL: "Smart card handbook, fourth edition" In: "Smart card handbook, fourth edition", 19 July 2010 (2010-07-19), Wiley, Chichester, West Sussex, U.K, XP055360681, ISBN: 978-0-470-74367-6 pages ToC,Ch01,Ch07,p348-352,485-519,Ch17-C,

## Beschreibung

Die Erfindung betrifft ein Verfahren zum Schutz eines Chipkarten-Terminals gegen unberechtigte Benutzung, ein Chipkarten-Terminal, eine Chipkarte, ein Computerprogrammprodukt und eine Signalfolge.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit

Bei den PiNs kann zwischen statischen und änderbaren Pins unterschieden wer-den. Eine statische PIN ist vom Benutzer nicht mehr veränderbar und muss von diesem auswendig gelernt werden. Ist sie bekannt geworden, dann muss der Kartenbenutzer seine Chipkarte zerstören, um Missbrauch durch Unbefugte zu unter-binden, und sich eine neue Chipkarte mit einer anderen statischen PIN besorgen. Ebenso braucht der Benutzer eine neue Chipkarte, wenn er oder sie die statische PIN vergessen hat.

Eine änderbare PIN kann vom Benutzer nach Belieben geändert werden. Zum Ändern der PIN ist es aus Sicherheitsgründen immer notwendig, die aktuell gültige PIN mit zu übergeben, da sonst jede bestehende PIN durch einen Angreifer mit seiner eigenen ersetzt werden könnte.

Anders verhält es sich mit den so genannten Super-PINs oder PUKs (Personal Unlocking Key). Diese haben in der Regel mehr Stellen als die eigentliche PIN, und werden dazu benutzt, einen auf seinem Maximalwert stehenden Fehlein-gabezähler (wird auch als "Fehlbedienungszähler" bezeichnet) einer PIN wieder zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat.

Es gibt auch Anwendungen, die Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1). Durch solche Verfahren ist eine sog. Erstbenutzerfunktion gegeben, die dem autorisierten Benutzer Sicherheit darüber verschafft, dass vor dessen Erbenutzung keine unerlaubte Nutzung der Chipkarte durch einen Dritten stattgefunden hat.

Aus der DE 198 50 307 C2 ist ein Verfahren zum Schutz vor Missbrauch bei Chipkarten bekannt. Die Chipkarte hat eine Erstnutzerfunktion, die bei der erstmaligen Benutzung der Daten und/oder Funktionen der Chipkarte die Vorgabe einer vom Benutzer beliebig wählbaren, persönlichen Geheimzahl (PIN) fordert, wobei durch die Eingabe der persönlichen Geheimzahl Daten und/oder Funktionen der Chipkarte in einen Benutzt-Status gesetzt werden. Eine spätere Änderung der persönlichen Geheimzahl wird durch einen übergeordneten Entsperrcode ermöglicht.

Aus dem Stand der Technik sind auch bereits Verfahren zur Überprüfung einer Kennung bekannt geworden, bei denen die Übertragung der Kennung selbst nicht erforderlich ist, wie zum Beispiel Strong Password Only Authentication Key Exchange (SPEKE), Diffie-Hellman Encrypted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus www.heise.de/security/news/meldung/85024 ist das PACE-Protokoll bekannt, welches sich besonderes für elliptische Kurven-Kryptographie eignet.

Die DE 10 2007 000 589 B3 beschreibt ein Verfahren zum Schutz einer Chipkarte gegen unberechtigte Benutzung mit folgenden Schritten: Eingabe einer ersten Kennung in einen Chipkarten-Terminal, Erzeugung eines Chiffrats aus zumindest einem ersten Kommunikationsparameter mit Hilfe eines aus der ersten Kennung abgeleiteten ersten symmetrischen Schlüssels, wobei mit Hilfe des Kommunikationsparameters ein geschützter erster Kommunikationskanal zwischen dem Chipkarten-Terminal und der Chipkarte definierbar ist, Übertragung des Chiffrats über einen vordefinierten Kommunikationskanal von dem ChipkartenTerminal an die Chipkarte, Versuch einer Entschlüsselung des Chiffrats mit Hilfe eines zweiten symmetrischen Schlüssels durch die Chipkarte, wobei das Resultat der Entschlüsselung nur dann der erste Kommunikationsparameter ist, wenn der erste symmetrische Schlüssel dem zweiten symmetrischen Schlüssel gleicht, sodass der geschützte erste Kommunikationskanal nur dann zwischen dem Chipkarten-Terminal und der Chipkarte definierbar ist, wenn die erste Kennung zutreffend ist.

Die Spezifikation "GlobalPlatform Card Specification Version 2.2" der GlobalPlatform Inc. aus dem März 2006 beschreibt eine Systemarchitektur, eine Kartenarchitektur, eine Sicherheitsarchitektur, Lebenszyklusmodelle, eine GlobalPlatform Umgebung, Sicherheitsdomänen, GlobalPlatform Dienste, eine Karten- und Anwendungsverwaltung, eine sichere Kommunikation und eine APDU-Kommandoreferenz für Chipkarten.

Die Verwendung einer PIN-Authentifizierung eignet sich nur dann, wenn ein Benutzer auch tatsächlich Zugriff auf das Chipkarten-Terminal bzw. mittels eines PIN-Pads oder einer Tastatur hat. Somit authentifiziert sich letztlich das Chipkarten-Terminal gegenüber der Karte. Allerdings gibt es auch den Bedarf, dass sich entweder die Chipkarte gegenüber dem Terminal authentifiziert und/oder eine gegenseitige Authentifizierung von Terminal und Chipkarte gewünscht ist.

Demgegenüber liegt der Erfindung die Aufgabe zugrunde, ein verbessertes Verfahren zum Schutz eines Chipkarten-Terminals gegen unberechtigte Benutzung zu schaffen. Der Erfindung liegt ferner die Aufgabe zugrunde, ein verbessertes Chipkarten-Terminal und eine verbesserte Chipkarte zu schaffen, sowie ein Computerprogrammprodukt und eine Signalfolge.

Die der Erfindung zugrunde liegenden Aufgaben werden jeweils mit den Merkmalen der unabhängigen Patentansprüche gelöst. Bevorzugte Ausführungsformen sind in den abhängigen Patentansprüchen angegeben.

Erfindungsgemäß wird ein Verfahren zum Schutz eines Chipkarten-Terminals gegen unberechtigte Benutzung geschaffen. Das Verfahren involviert neben dem Chipkarten-Terminal selbst ein Chipkarte.

Es wird ein Verfahren angegeben zum wechselseitigen Schutz einer Chipkarte und wenigstens einer Umgebung der Chipkarte gegen unberechtigte Benutzung, wobei die Umgebung ein Chipkarten-Terminal aufweist, wobei die Chipkarte eine erste Kennung aufweist, wobei das Verfahren die folgenden Schritte einer Umgebungs-Authentifizierung aufweist:
- Erzeugung eines Chiffrats aus zumindest einem ersten Kommunikationsparameter mit Hilfe eines aus der ersten Kennung abgeleiteten ersten symmetrischen Schlüssels, wobei mit Hilfe des Kommunikationsparameters ein geschützter erster Kommunikationskanal zwischen dem Chipkarten-Terminal und der Chipkarte definierbar ist,
- Übertragung des Chiffrats über einen vordefinierten Kommunikationskanal von der Chipkarte an das Chipkarten-Terminal,
- Versuch einer Entschlüsselung des Chiffrats mit Hilfe eines zweiten symmetrischen Schlüssels durch das Chipkarten-Terminal, wobei das Resultat der Entschlüsselung nur dann der erste Kommunikationsparameter ist, wenn der erste symmetrische Schlüssel dem zweiten symmetrischen Schlüssel gleicht, sodass derSchutz des ersten Kommunikationskanals nur dann zwischen dem Chipkarten-Terminal und der Chipkarte definierbar ist, wenn die erste Kennung zutreffend ist, wobei der erste Kommunikationsparameter eine kryptografische Information, z.B. einen öffentlichen Schlüssel der Chipkarte umfasst, wobei das Chipkarten-Terminal im Fall, dass die Entschlüsselung des Chiffrats gelingt, aus der kryptografischen Information z.B. nach dem DiffieHellman (DH)-Verfahren einen weiteren symmetrischen Schlüssel zur Verschlüsselung der Kommunikation zwischen dem Chipkarten-Terminal und der Chipkarte ableitet, wobei durch die Verschlüsselung mit dem weiteren symmetrischen Schlüssel eine erfolgreiche Authentifizierung der Chipkarte gegenüber der Umgebung erfolgt ist.

Unter "Chipkarten-Terminal" wird hier jedes Gerät verstanden, welches zur Kommunikation mit einer Chipkarte ausgebildet ist, um beispielsweise Chipkarten-Kommandos an die Chipkarte zu richten und entsprechende Antworten von der Chipkarte zu empfangen. Die Kommunikation zwischen Chipkarte und Chipkarten-Terminal kann dabei kontaktbehaftet, drahtlos, beispielsweise über ein RFID-Verfahren, oder wahlweise kontaktbehaftet oder drahtlos erfolgen, insbesondere über eine so genannte Dual-Mode-Schnittstelle. Bei dem Chipkarten-Terminal kann es sich um ein so genanntes Klasse 1, 2 oder 3 Chipkarten-Lesegerät mit oder ohne eigener Tastatur oder einen Computer handeln, an den ein Chipkarten-Lesegerät angeschlossen ist. Bei dem Chipkarten-Terminal kann es sich auch um ein für einen bestimmten Zweck vorgesehenes Terminal handeln, wie zum Beispiel einen Bankterminal zur Abwicklung von Bankgeschäften, einen Bezahlterminal, beispielsweise zum Kauf elektronischer Tickets, oder einen Zugangsterminal zur Freigabe des Zugangs zu einem geschützten Bereich. Ferner kann das Terminal beispielsweise der Zugangskontrolle zu einem Skilift oder Skigebiet oder der Zugangskontrolle zu einem Hotelzimmer dienen.

Unter dem Terminus "Schutz einer Chipkarte" wird hier der Schutz der Chipkarte insgesamt oder der Schutz von einer oder mehreren Chipkartenfunktionen der Chipkarte verstanden. Beispielsweise wird erfindungsgemäß eine besonders schützenswerte Chipkartenfunktion der Chipkarte geschützt, wie zum Beispiel eine Signaturfunktion zur Generierung einer elektronischen Signatur, eine Bezahlfunktion, eine Authentisierungsfunktion oder dergleichen.

Somit erzeugt die Chipkarte ein Chiffrat aus zumindest einem ersten Kommunikationsparameter mit Hilfe eines ersten symmetrischen Schlüssels. Bei dem ersten symmetrischen Schlüssel kann es sich um die Kennung selbst handeln oder um einen von der Kennung abgeleiteten symmetrischen Schlüssel. Beispielsweise dient die Kennung als so genannter Seed Value zur Generierung des ersten symmetrischen Schlüssels durch die Chipkarte.

Der zumindest eine Kommunikationsparameter ist so beschaffen, dass durch ihn der Schutz des ersten Kommunikationskanals zwischen der Chipkarte und dem ChipkartenTerminal definierbar ist. Um diesen geschützten ersten Kommunikationskanal zwischen dem Chipkarten-Terminal und der Chipkarte aufbauen zu können, wird zunächst das mit Hilfe des ersten symmetrischen Schlüssels gewonnene Chiffrat des ersten Kommunikationsparameters über einen vordefinierten Kommunikationskanal von der Chipkarte an das Chipkarten-Terminal übertragen. Dieser vordefinierte Kommunikationskanal ist also zum Aufbau einer initialen Kommunikation zwischen der Chipkarte und dem Chipkarten-Terminal definiert. Beispielsweise kann bei einer initialen Kontaktaufnahme zwischen Chipkarte und Terminal der vordefinierte Kommunikationskanal ausgehandelt werden und/oder der Kommunikationskanal ist standartmäßig festgelegt und vordefiniert.

Nach der Übertragung des Chiffrats über diesen vordefinierten Kommunikationskanal von der Chipkarte an das Chipkarten-Terminal wird seitens des Chipkarten-Terminals der Versuch einer Entschlüsselung dieses Chiffrats mit Hilfe eines zweiten symmetrischen Schlüssels unternommen. Diese Entschlüsselung gelingt nur dann, wenn der zweite symmetrische Schlüssel gleich dem ersten Schlüssel ist.

Der Aufbau einer Kommunikationsverbindung über den geschützten ersten Kommunikationskanal ist also nur dann möglich, wenn die erste Kennung "zutreffend ist", d.h. wenn der erste symmetrische Schlüssel mit dem zweiten symmetrischen Schlüssel identisch ist. In diesem Fall sind Chipkarte und Terminal aufeinander abgestimmt, da das ChipkartenTerminal nur in diesem Fall Kenntnis von dem ersten Kommunikationsparameter erlangt, durch den der erste Kommunikationskanals festlegbar ist.

Wenn die wenn die erste Kennung "nicht zutreffend ist", d.h. wenn der erste symmetrische Schlüssel dem zweiten symmetrischen Schlüssel nicht entspricht, hat dies zur Folge, dass die Entschlüsselung des von der Chipkarte empfangenen Chiffrats durch das ChipkartenTerminal mit Hilfe des zweiten Schlüssels nicht den ersten Kommunikationsparameter hervorbringt, sondern beispielsweise einen zweiten Kommunikationsparameter, der von dem ersten Kommunikationsparameter abweicht.

Durch den zweiten Kommunikationsparameter kann ein zweiter Kommunikationskanal definiert sein, der von dem ersten Kommunikationskanal abweichend ist, d.h. der Schutz des zweiten Kommunikationskanals ist ein anderer wie der Schutz des ersten Kommunikationskanals. Wenn das Chipkarten-Terminal auf dem ersten Kommunikationskanal ein Signal empfängt, so wird dieses jedoch ignoriert, da das Chipkarten-Terminal ein Signal auf dem zweiten Kommunikationskanal erwartet. Im Ergebnis kommt also keine Kommunikation zwischen der Chipkarte und dem Chipkarten-Terminal zustande, da die beiden Kommunikationskanäle einen unterschiedlichen Schutz, d.h. unterschiedliche Verschlüsselungen zur Kommunikation einsetzen.

Erfindungsgemäß umfasst der erste Kommunikationsparameter eine kryptografische Information wie z.B. einen Domainparameter oder einen öffentlichen Schlüssel eines asymmetrischen Schlüsselpaars der Chipkarte. Der erste Kommunikationsparameter kann jedoch auch weitere Informationen umfassen, welche die physikalischen und logischen Eigenschaften des zur Kommunikation zu verwendenden Kommunikationskanals spezifizieren. Hier kann es sich beispielsweise um die Angabe einer Übertragungsfrequenz, eines Frequenz-Hopping-Schemas, eines Codierungs-Verfahrens und/oder eines Modulationsverfahrens handeln.

Nach einer Ausführungsform der Erfindung wird für die Festlegung eines symmetrischen Schlüssels für die Kommunikation zwischen der Chipkarte und dem Chipkarten-Terminal, beispielsweise nach dem Diffie-Hellman-Verfahren, die kryptografische information wie z.B. der öffentliche Schlüssel der Chipkarte mit dem aus der ersten Kennung gewonnenen ersten symmetrischen Schlüssel verschlüsselt und über den vordefinierten Kommunikationskanal an das Chipkarten-Terminal gesendet.

Nur wenn der erste symmetrische Schlüssel dem zweiten symmetrischen Schlüssel entspricht, erhält das Chipkarten-Terminal die korrekte kryptografische Information der Chipkarte. Die Chipkarte generiert aus der kryptografischen Information der Chipkarte, z.B. nach dem Diffie-Hellman-Verfahren einen dritten Schlüssel. Im Falle dessen die kryptografische Information einen öffentlichen Schlüssel umfasst, generiert das Chipkarten-Terminal aus deren privaten Schlüssel und dem mit Hilfe des zweiten symmetrischen Schlüssels entschlüsselten Chiffrats einen vierten Schlüssel ebenfalls nach z.B. dem Diffie-Hellman-Verfahren, wobei der vierte Schlüssel nur dann gleich dem dritten Schlüssel ist, wenn der erste symmetrische Schlüssel dem zweiten symmetrischen Schlüssel entspricht.

Der dritte und der identische vierte symmetrische Schlüssel dient zur Verschlüsselung von Signalen, insbesondere Chipkarten-Kommandos und Antworten auf solche Chipkarten-Kommandos, die zwischen der Chipkarte und dem Chipkarten-Terminal über den ersten Kommunikationskanal ausgetauscht werden. Dieser erste Kommunikationskanal ist bezüglich der zu verwendenden Datenverschlüsselung über den dritten Schlüssel definiert, mit Hilfe dessen die Kommunikation über den ersten Kommunikationskanal mit einem symmetrischen Verschlüsselungsverfahren verschlüsselt wird.

Nach einer Ausführungsform der Erfindung wird ein Verfahren der diskreten logarithmischen Kryptographie (DLC) für die Generierung eines dritten Schlüssels durch das Chipkarte und eines vierten Schlüssels durch das Chipkarten-Terminal verwendet, wobei der vierte Schlüssel nur dann gleich dem dritten Schlüssel ist, wenn der erste symmetrische Schlüssel dem zweiten symmetrischen Schlüssel entspricht, d.h. die Kennung "zutreffend" ist.

Für die Festlegung des dritten Schlüssels kommen im Prinzip beliebige Verfahren der diskreten logarithmischen Kryptographie zur Anwendung, wie sie beispielsweise in der Norm National Institute of Standards and Technology (NIST), NIST Special Publication 800-56A, März, 2007 sowie in Standards for Efficient Cryptography, SEC1: Elliptic Curve Cryptography, Certicom Research, September 20, 2000, Version 1.0, beschrieben sind. Solche Verfahren erfordern die Erzeugung von so genannten Domainparametern zum Zweck der Generierung der identischen dritten und vierten Schlüssel durch das Chipkarte bzw. die Chipkarte.

Nach einer Ausführungsform der Erfindung wird als DLC ein Verfahren der elliptischen Kurvenkryptographie (ECC) eingesetzt, insbesondere Elliptic Curve Diffie-Hellman (ECDH).

Nach einer Ausführungsform der Erfindung wird die erste Kennung als so genannter Seed Value für die Ableitung des ersten symmetrischen Schlüssels verwendet. Dadurch wird ein Schlüssel einer größeren Länge erzeugt, als die bei Verwendung der ersten Kennung unmittelbar als Schlüssel der Fall wäre.

Nach einer Ausführungsform der Erfindung wird auf dem Chipkarten-Terminal eine zweite Kennung, gespeichert, aus der der zweite Schlüssel für die Entschlüsselung des von der Chipkarte initial empfangenen Chiffrats ableitbar ist. Zur Ableitung des zweiten Schlüssels aus der zweiten Kennung kann die zweite Kennung als Seed Value verwendet werden.

Nach einer Ausführungsform der Erfindung ist nicht die zweite Kennung selbst in dem Chipkarten-Terminal gespeichert, sondern nur der zweite Schlüssel. Der zweite Schlüssel ist vorzugsweise in einem nichtflüchtigen geschützten Speicherbereich dem ChipkartenTerminal gespeichert.

In einem weiteren Aspekt betrifft die Erfindung ein Chipkarten-Terminal, mit einer Schnittstelle zur Kommunikation über einen vordefinierten Kommunikationskanal und mehreren weiteren Kommunikationskanälen mit einer Chipkarte, wobei das Chipkarten-Terminal wenigstens einer Umgebung zugeordnet ist. Ferner umfasst das Termin Mittel zur Entschlüsselung eines auf dem vordefinierten Kanal empfangenen Chiffrats, welches mit Hilfe eines ersten symmetrischen Schlüssels verschlüsselt ist, mit Hilfe eines zweiten symmetrischen Schlüssels, wobei die Entschlüsselung zumindest einen Kommunikationsparameter ergibt, wenn eine auf der Chipkarte gespeicherte erste Kennung zutreffend ist, wobei durch den Kommunikationsparameter einer der weiteren Kommunikationskanäle für die geschützte Kommunikation zwischen der Chipkarte und dem Chipkarten-Terminal der Umgebung eindeutig festgelegt ist.

Nach einer Ausführungsform der Erfindung wird durch den ersten Kommunikationsparameter eine kryptografische Information, z.B. ein öffentlicher Schlüssel oder ein Domainparameter angegeben, und das Terminal umfasst Mittel zur Durchführung eines Diffie-Hellman-Verfahrens zur Ableitung eines weiteren symmetrischen Schlüssels mit Hilfe der kryptografischen Information.

Nach einer Ausführungsform der Erfindung umfasst das Terminal ferner Mittel zur Durchführung eines diskreten logarithmischen Verschlüsselungsverfahrens zur Erzeugung des weiteren symmetrischen Schlüssels (S4), wobei der weitere symmetrische Schlüssel zur symmetrischen Verschlüsselung der Kommunikation zwischen dem Chipkarten-Terminal und der Chipkarte über den festgelegten Kommunikationskanal vorgesehen ist.

Nach einer Ausführungsform der Erfindung umfasst das Terminal ferner einen nicht flüchtigen geschützten Speicherbereich zur Speicherung einer zweiten Kennung, aus der der zweite Schlüssel ableitbar ist.

Nach einer Ausführungsform der Erfindung umfasst das Terminal ferner einen geschützten nicht-flüchtigen Speicherbereich zur Speicherung des zweiten Schlüssels.

In einem weiteren Aspekt betrifft die Erfindung eine, auf wenigstens eine Umgebung eines Chipkarten-Terminals, bezogene Chipkarte mit einer ersten Kennung, und Mitteln zur Erzeugung eines Chiffrats aus zumindest einem ersten Kommunikationsparameter mit Hilfe eines aus der ersten Kennung abgeleiteten ersten umgebungsbezogenen symmetrischen Schlüssels, wobei mit Hilfe des Kommunikationsparameters ein geschützter erster Kommunikationskanal zwischen dem Chipkarten-Terminal der und der Chipkarte der Umgebung definierbar ist, wobei die Chipkarte für jede Umgebung jeweils eine erste Kennung gespeichert hat, aus welcher der erste umgebungsbezogene symmetrische Schlüssel ableitbar ist. Ferner umfasst die Chipkarte Mittel zum Senden des Chiffrats über einen vordefinierten Kommunikationskanal an das Chipkarten-Terminal.

Nach einer Ausführungsform der Erfindung umfasst die Chipkarte ferner einen Speicherbereich für Sperrdaten, wobei die Chipkarte gesperrt ist, wenn die Sperrdaten einen vordefinierten Wert aufweisen, wobei die Chipkarte zum Empfang der Sperrdaten von dem Chipkarten-Terminal ausgebildet ist.

Nach einer Ausführungsform der Erfindung handelt es sich bei der Chipkarte um ein Dokument, insbesondere ein Wert- oder Sicherheitsdokument, um eine Ausweiskarte, ein Zahlungsmittel, eine Signaturkarte, eine Skiliftkarte, eine Hotelkarte oder dergleichen handelt.

In einem weiteren Aspekt betrifft die Erfindung eine Chipkarten-Terminal mit ChipkartenTerminal mit einer Schnittstelle zur Kommunikation über einen vordefinierten Kommunikationskanal und mehreren weiteren Kommunikationskanälen mit einem Chipkarte, Mitteln zur Entschlüsselung eines auf dem vordefinierten Kanal empfangenen Chiffrats, welches mit Hilfe eines ersten symmetrischen Schlüssel verschlüsselt ist, mit Hilfe eines zweiten symmetrischen Schlüssels, wobei die Entschlüsselung zumindest einen Kommunikationsparameter ergibt, wenn eine zuvor in den Chipkarte eingegebene erste Kennung zutreffend ist, wobei durch den Kommunikationsparameter einer der weiteren Kommunikationskanäle für die geschützte Kommunikation zwischen dem Chipkarten-Terminal und der Chipkarte eindeutig festgelegt ist.

Nach einer Ausführungsform der Erfindung hat die Chipkarte eine Erstbenutzerfunktion. Die unbenutzte Chipkarte befindet sich in ihrem Erstbenutzungszustand, in dem ein bestimmter Kommunikationsparameter für eine erste Wahl des ersten Kommunikationskanals festgelegt ist. Die Chipkarte geht aus ihrem Erstbenutzungszustand in einen Benutztzustand über, wenn sie zum ersten Mal ein Chipkartenkommando auf diesem ersten Kommunikationskanal empfängt. Für die weitere Verwendung der Chipkarte muss dann seitens des Chipkartenterminals ein anderer Kommunikationsparameter gewählt werden.

Bei geeignet gewähltem ersten und zweitem symmetrischen Schlüssel, kann das Verfahren zur gegenseitigen Authentisierung von Umgebung und Karten benutzt werden. Die zum Zugang für eine bestimmte Umgebung (Firma, Sicherheitsbereich, Skilift, ...) ausgegebenen Karten beinhalten einen ersten symmetrischen Schlüssel, der vorzugsweise nicht aus der Karte ausgelesen werden kann und der nur dem Hintergrundsystem der Umgebung bekannt ist.

Unter Hintergrundsystem wird dabei ein System verstanden, an welches ein obig beschriebenes Chipkarten-Terminal angeschlossen ist. Die bezüglich des Terminals beschriebenen Verfahrensschritte können in diesem Fall vollständig oder teilweise durch das Hintergrundsystem, z.B. ein Computersystem, durchgeführt werden.

Will z.B. eine Person zur Umgebung, zu welcher das Chipkarten-Terminal zugeordnet ist, Zugang haben, muss sich diese Person mit der Chipkarte gegen die Umgebung dafür authentisieren. Dabei wird das beschriebene Verfahren zwischen Karte und Hintergrundsystem ausgeführt. Kann das Verfahren erfolgreich ausgeführt werden, sind Karte und System gegenseitig authentisiert und damit zum Zugang autorisiert.

Nach einer Ausführungsform der Erfindung können in einer Karte mehrere erste symmetrische Schlüssel für verschiedene Umgebungen mit Chipkarten-Terminals verwendet werden. Eine solche Umgebung kann räumlich begrenzt sein, z.B. ein Hotelzimmer oder ein Skilift. Auch eine zeitliche Begrenzung ist möglich. Z.B. wird ein Zugang in Abhängigkeit von der aktuellen Uhrzeit gewährt oder zurückgewiesen.

Nach einer Ausführungsform der Erfindung kann das Chipkarten-Terminal über den durch das o.g. Verfahren hergestellten kryptographisch gesicherten Kanal spezifische auf der Karte abgespeicherte Daten lesen, um z.B. individuelle Daten zu prüfen oder zu protokollieren. Unberechtigte Systeme können solche Daten nicht lesen, da sie den hierfür erforderlichen zweiten symmetrischen Schlüssel nicht kennen.

Nach einer Ausführungsform der Erfindung handelt es sich bei den Chipkarten um kontaktlose Chipkarten. Diese Chipkarten beherrschen vorzugsweise das PACE-Protokoll nach TR-03110, V 2.05, des BSI.

Das Kartenprofil der Chipkarten kann nach einer Ausführungsform der Erfindung mehrere PACE-Schlüssel, d.h. mehrere erste symmetrische Schlüssel für verschiedene Umgebungen unterstützen.

Nach einer Ausführungsform der Erfindung generiert ein Hintergrundsystem für eine spezifische Umgebung PACE-Schlüssel, d.h. erste symmetrische Schlüsseln für Chipkarten mit einer hohen Entropie, so dass der erste symmetrische Schlüssel mit fast absoluter Wahrscheinlichkeit nicht erraten werden kann. Dabei sind Systeme möglich, bei denen alle Zugangskarten den gleichen ersten symmetrische Schlüssel erhalten und solche, bei denen für die Zugangskarten individuelle erste symmetrische Schlüssel auf der Grundlage einen (System-) Master-Schlüssels und eines eindeutigen Kartenmerkmals (z.B. Kartennummer) erhalten.

In die Karten für die genannte Umgebung wird der generierte erste symmetrische Schlüssel eingebracht. Nach einer Ausführungsform der Erfindung kann es auf den Karten Datengruppen geben, in denen Merkmale der Karten oder der Karteninhaber gespeichert werden und auf die nur nach einer erfolgreichen Abwicklung des o.g. Verfahrens mit dem benannten ersten symmetrischen Schlüssel lesend zugegriffen werden kann.

In der operativen Anwendung kann z.B. ein Nutzer Zugang zur Umgebung bekommen und muss dafür seine Chipkarte in Form einer Zugangskarte an einen Kartenleser, d.h. ein Chipkarten-Terminal des Hintergrundsystems halten. Es sind vorzugsweise keine Eingaben des Nutzers nötig. Das Hintergrundsystem stößt den Ablauf des o.g. Verfahrens z.B. unter Verwendung des PACE-Protokolls mit dem entsprechenden ersten symmetrischen Schlüssel an.

Falls kartenindividuelle erste symmetrische Schlüssel verwendet werden, z.B. muss zwischen Terminal und Chipkarte ein eindeutiges Kartenmerkmal (optisch oder elektronisch) kommuniziert werden, welches das Hintergrundsystem befähigt, den individuellen ersten symmetrische Schlüssel zu berechnen und diesen dann anwenden.

Mittels des o.g. Verfahrens kann nicht nur die Karte prüfen, ob das Hintergrundsystems im Besitz des richtigen ersten symmetrischen Schlüssels war, was z.B. aus Gründen das Datenschutzes für optional auf der Karte gespeicherte Daten nötig sein könnte. Auch das Hintergrundsystem kann prüfen, ob die Karte im Besitz des richtigen ersten symmetrisches Schlüssels war. Wenn für den Zugang nur das Vorlegen einer geeigneten Karte nötig sein soll, ist die Prüfung der Zulässigkeit mit dem erfolgreichen Abschluss des o.g. Verfahrens schon erfolgt.

Mit dem beschriebenen Verfahren wird auch ein kryptographischer Kanal zwischen Hintergrundsystem und Karte hergestellt. Wenn zur Prüfung für den Zugang zum System noch weitere individuelle Daten hinzu gezogen werden sollen, können z.B. über diesen Kanal diese Daten aus der Karte gelesen werden. Da die Karte vor dem Auslesen der Daten authentisiert wurde, können diese Daten als vertrauenswürdig betrachtet werden.

Im normalen Betrieb eines Zugangssystems kann es außerdem die Notwendigkeit von Sperrungen geben. Bei Umgebungen mit individuellem erstem symmetrischem Schlüssel können nach einer Ausführungsform der Erfindung im Hintergrundsystem die Karten mit dem eindeutigen Merkmal gesperrt werden.

Nach einer weiteren Ausführungsform der Erfindung können auch bei einheitlichem erstem symmetrischem Schlüssel Karten mit optionalen zusätzlichen Daten durch das Hintergrundsystem einfach gesperrt werden, indem der Zugang für bestimmte Werte der Daten nicht mehr erlaubt wird. Bei Umgebungen mit einheitlichem erstem symmetrischem Schlüssel, bei denen keine zusätzlichen Daten ausgewertet werden, muss in einem solchen Fall der Schlüssel gewechselt werden und alle noch gültigen Karten müssen mit dem neuen ersten symmetrischen Schlüssel beschrieben werden.

Die Erfindung hat den Vorteil, dass Halbleiter und Betriebssysteme für deutsche Personalausweise das PACE-Protokoll implementiert haben und damit zertifiziert sind. Durch Anwendung des o.g. Verfahrens können durch geeignete Gestaltung des Filesystems auf solchen Karten Zugangskarten für verschiedene Zwecke erstellt werden. Den Kunden können die Protokolle und die Sicherheitseigenschaften offen gelegt werden. Hintergrundsysteme könnten von den Kunden selbst implementiert werden.

In einem weiteren Aspekt betrifft die Erfindung ein Computerprogrammprodukt mit von einem Prozessor ausführbaren Instruktionen zur Durchführung der Schritte gemäß dem beschriebenen Verfahren.

In einem weiteren Aspekt betrifft die Erfindung ein Signalfolge, die, wenn in einem Computer abgespeichert, eine Abfolge von Instruktionen darstellt, die, wenn auf diesem Computer ausgeführt, das zuvor geschilderte Verfahren ausführt.

Im Weiteren werden Ausführungsformen der Erfindung mit Bezugnahme auf die Zeichnungen näher erläutert. Es zeigen:
Figur 1 ein Blockdiagramm eines Chipkarten-Terminals und einer Chipkarte,
Figur 2 ein Flussdiagramm eines Kommunikationsverfahrens,
Figur 3ein Blockdiagramm eines Chipkarten-Terminals und einer Chipkarte,
Figur 4ein Flussdiagramm Kommunikationsverfahrens.

In den nachfolgenden Figuren sind einander entsprechende Elemente der verschiedenen Ausführungsformen mit gleichen Bezugszeichen gekennzeichnet.

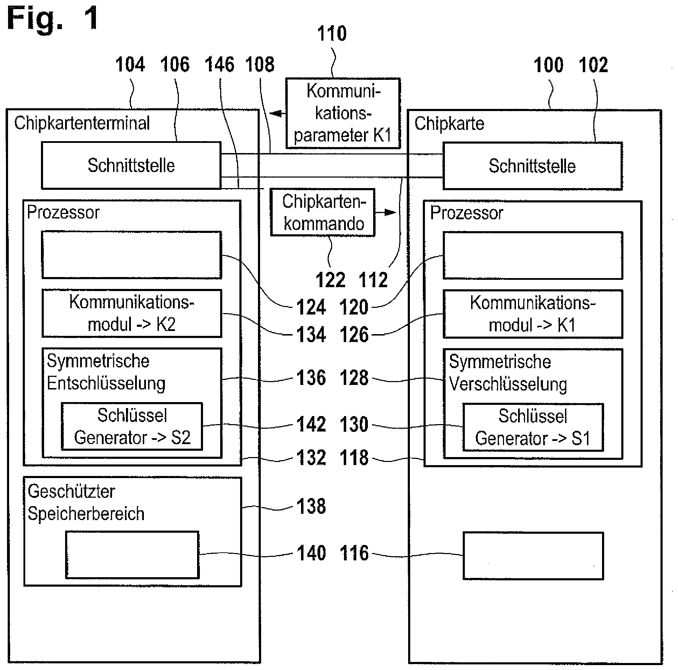

Die Figur 1 zeigt ein Blockdiagramm einer Chipkarte 100. Der Chipkarte 100 hat eine Schnittstelle 102 zur Kommunikation mit einem Chipkarten-Terminal 104, das eine entsprechende Schnittstelle 106 aufweist. Vorzugsweise sind die Schnittstellen 102 und 106 für eine drahtlose Kommunikation, beispielsweise über Funk, insbesondere nach einem RFID-Verfahren ausgebildet.

Die Schnittstellen 102 und 106 sind beispielsweise so beschaffen, dass zwischen den Schnittstellen 102, 106 verschiedene Kommunikationskanäle aufgebaut werden können, wobei sich diese Kommunikationskanäle auf einer physikalischen und/oder logischen Ebene voneinander unterscheiden. Beispielsweise können Kommunikationskanäle unterschiedlicher Übertragungsfrequenzen aufgebaut werden. Es können auch Kommunikationskanäle auf der Basis verschiedener Frequenz-Hopping-Schemata aufgebaut werden. Unter "Frequenz-Hopping" werden hier Frequenzsprung-Verfahren verstanden, wonach die für die Datenübertragung verwendeten Frequenzen nach einem definierten Schema fortlaufend geändert werden.

Die Schnittstellen 102, 106 können auch so ausgebildet sein, dass unterschiedliche Kommunikationskanäle mit Hilfe unterschiedlicher Codierungsverfahren und/oder Modulationsverfahren, wie zum Beispiel Frequenzmodulation, Amplitudenmodulation, Phasenmodulation, Pulsweitenmodulation oder anderer Modulationsverfahren aufgebaut werden. Kommunikationskanäle können sich auch allgemein bezüglich der zur Kommunikation auf einem physikalischen Kanal verwendeten Verschlüsselungen unterscheiden.

Die verschiedenen Kommunikationskanäle, die zwischen den Schnittstellen 102 und 106 aufgebaut werden können, werden im Weiteren als die "Menge der Kommunikationskanäle" bezeichnet.

Einer der Kommunikationskanäle 108 aus der Menge der Kommunikationskanäle ist für die initiale Kommunikation zwischen der Chipkarte 100 und dem Chipkarten-Terminal 104 vordefiniert. Beispielsweise ist der Kommunikationskanal hinsichtlich seiner Übertragungsfrequenz sowie der zu verwendenden Modulations- und Codierungsverfahren vordefiniert.

Der vordefinierte Kommunikationskanal dient zur Übertragung von einem Chiffrat 110 des zumindest einen Kommunikationsparameters K1 von der Chipkarte 100 zu dem ChipkartenTerminal 104, um dem Chipkarten-Terminal 104 mitzuteilen, welcher der Kommunikationskanäle 112 der Menge von Kommunikationskanälen für die nachfolgende Kommunikation mit der Chipkarte 100 verwendet werden soll.

Der Kommunikationsparameter K1 beinhaltet also eine Angabe, die diesen Kommunikationskanal 112 eindeutig spezifiziert. Diese Angabe kann in Form eines Codeworts erfolgen. In dem Chipkarten-Terminal 104 kann in einem nichtflüchtigen Speicher eine so genannte Lookup-Tabelle gespeichert sein, in der den möglichen Codeworten jeweils eine Spezifizierung einer der Kommunikationskanäle der Menge der Kommunikationskanäle zugeordnet ist. Erfindungsgemäß umfasst der Kommunikationsparameter K1 z.B. einen öffentlichen Schlüssel eines asymmetrischen Schlüsselpaars der Chipkarte 100. In der gezeigten Ausführungsform umfasst der Kommunikationsparameter K1 also neben Kanalinformationen in Form z.B. eines Codeworts auch den öffentlichen Schlüssel der Chipkarte.

Für die Auswahl eines Kommunikationskanals aus der Menge von Kommunikationskanälen können sämtliche mögliche, zwischen den Schnittstellen 102, 106 aufbaubaren Kommunikationskanäle zur Verfügung stehen oder eine Auswahl davon, wobei dann jeder der Kommunikationskanäle der Menge von Kommunikationskanälen, der tatsächlich für die Kommunikation zwischen der Schnittstelle 102, 106 verwendet werden kann, einem eindeutigen Codewort zugeordnet ist, welches als Kommunikationsparameter 110 von der Chipkarte 100 an das Chipkarten-Terminal 104 übertragen werden kann.

Die Chipkarte hat einen Speicherbereich, in welchem sich eine Kennung 116 befindet.

Das Terminal 104 hat zumindest einen Prozessor 132 zur Ausführung eines Anwendungsprogramms 124. Das Anwendungsprogramm 124 kann die Generierung eines Chipkarten-Kommandos 122 veranlassen, um eine bestimmte Chipkartenfunktion 120 auf der Chipkarte aufzurufen. Beispielsweise benötigt das Anwendungsprogramm 124 die Chipkartenfunktion 120 für eine Authentizitätsprüfung, für die Generierung einer digitalen Signatur, für die Überprüfung einer Berechtigung, insbesondere einer Zugangsberechtigung, die Vornahme einer finanziellen Transaktion oder dergleichen.

Der Prozessor 118 der Chipkarte 100 dient zur Ausführung der Programminstruktionen eines Kommunikationsmoduls 126, welches zur Auswahl des Kommunikationskanals 112 aus der Menge der Kommunikationskanäle und damit zur Wahl des Kommunikationsparameters 110 dient. Die Auswahl des Kommunikationsparameters 110 kann nach einem vorgegebenen Schema oder zufällig, insbesondere pseudo-zufällig, erfolgen. Beispielsweise ist in dem Kommunikationsmodul 126 eine Liste von verschiedenen Kommunikationsparametern 110 abgelegt, die zyklisch abgearbeitet wird.

Der Prozessor 118 dient ferner der Ausführung von Programminstruktionen 128 für eine symmetrische Verschlüsselung der Kommunikationsparameter 110. Die Verschlüsselung erfolgt mit Hilfe der Kennung 116. Hierzu können die Programminstruktionen 128 einen Schlüsselgenerator 130 beinhalten.

Der Schlüsselgenerator 130 kann so ausgebildet sein, dass er aus der Kennung 116 als Seed Value einen ersten symmetrischen Schlüssel generiert, der im Weiteren als S1 bezeichnet wird. Der Schlüssel S1 dient zur symmetrischen Verschlüsselung des von dem Kommunikationsmodul 126 selektierten Kommunikationsparameters K1. Das sich aus der symmetrischen Verschlüsselung mit dem Schlüssel S1 ergebende Chiffrat des Kommunikationsparameters K1 wird über den vordefinierten Kommunikationskanal 108 von der Schnittstelle 102 zu der Schnittstelle 106 übertragen.

Das Chipkarten-Terminal 104 hat einen Prozessor 132, der zur Ausführung der Programminstruktionen eines Kommunikationsmoduls 134 dient. Das Kommunikationsmodul 134 ist zur Verarbeitung des von der Chipkarte 100 empfangenen Kommunikationsparameters K1 ausgebildet. Das Kommunikationsmodul 134 kann beispielsweise mit dem Kommunikationsparameter K1 als Schlüssel auf eine Zuordnungstabelle, insbesondere eine lookup Tabelle, zugreifen, um die Parameter des von der Chipkarte 100 selektierten Kommunikationskanals 112 abzufragen, wie zum Beispiel dessen Übertragungsfrequenz und/oder die zu verwendenden Codierungs- und Modulationsverfahren.

Der Prozessor 132 dient ferner zur Ausführung von Programminstruktionen 136 für die symmetrische Entschlüsselung des Chiffrats 110, welches das Chipkarten-Terminal 104 von der Chipkarte 100 empfangen hat. Beispielsweise hat das Chipkarten-Terminal 104 einen geschützten Speicherbereich 138, in dem eine zweite Kennung 140 gespeichert ist.

Die Programminstruktionen 136 können einen Schlüsselgenerator 142 beinhalten, der die zweite Kennung als so genannten Seed Value verwendet, um daraus einen zweiten Schlüssel abzuleiten. Dieser symmetrische zweite Schlüssel wird im Weiteren als S2 bezeichnet.

Alternativ kann der Schlüssel S2 in dem geschützten Speicherbereich 138 dem ChipkartenTerminal 104 anstelle der zweiten Kennung 140 gespeichert sein. Der Schlüsselgenerator 142 sowie eine Speicherung der zweiten Kennung 140 in dem Chipkarten-Terminal 104 erübrigen sich dann. Im Unterschied zum Stand der Technik muss also auf dem Chipkarten-Terminal 104 nicht unbedingt die zweite Kennung 140 als Referenzwert für die Prüfung der Richtigkeit der ersten Kennung 116 gespeichert sein.

Die Chipkarte 100 kann ferner eine Erstbenutzungsfunktion aufweisen. Beispielsweise ist der Erstbenutzungsstatus durch einen bestimmten Kommunikationsparameter definiert, der einen der Kommunikationskanäle der Menge spezifiziert, der für die erste Benutzung durch die Chipkarte verwendet werden muss.

Die Durchführung des erfindungsgemäßen Verfahrens erfordert zunächst folgende Schritte: Das Kommunikationsmodul 126 wählt anhand von der Kennung 116 einen ersten der möglichen Kommunikationsparameter beispielsweise aus der vorgegebenen Liste der Kommunikationsparameter aus, also den Kommunikationsparameter K1. Neben physikalischen und logischen Kanalinformationen weißt der Kommunikationsparameter K1 auch noch den öffentlichen Schlüssel der Chipkarte auf.

Es sei jedoch darauf verwiesen, dass die physikalischen und logischen Kanalinformationen optional sind. Das Verfahren kann auch unter ausschließlicher Verwendung des öffentlichen Schlüssels als Kommunikationsparameter K1 mittels einer vordefinierten festen Kanalspezifizierung durchgeführt werden.

Der Schlüsselgenerator 130 generiert aus der Kennung 116 den Schlüssel S1. Der Kommunikationsparameter K1 wird daraufhin durch Ausführung der Programminstruktionen 128 mit Hilfe des symmetrischen Schlüssels S1 verschlüsselt. Das daraus resultierende Chiffrat 110 des Kommunikationsparameters K1 wird dann über den vordefinierten Kommunikationskanal 108 von der Schnittstelle 102 an die Schnittstelle 106 dem Chipkarten-Terminal 104 gesendet.

Das Chipkarten-Terminal 104 leitet erforderlichenfalls den Schlüssel S2 aus der Kennung 140 ab oder greift direkt auf den Schlüssel S2 in den geschützten Speicherbereich 138 zu. Mit Hilfe des Schlüssels S2 wird der Versuch einer Entschlüsselung des von der Chipkarte 100 empfangenen Chiffrats 110 des Kommunikationsparameters K1 durch Ausführung der Programminstruktionen 136 von dem Chipkarten-Terminal 104 unternommen.

Das Ergebnis dieses Entschlüsselungsversuchs ist ein zweiter Kommunikationsparameter, der im Weiteren als K2 bezeichnet wird, und der dem Kommunikationsmodul 134 übergeben wird. Dieser Kommunikationsparameter K2 ist nur dann identisch mit dem Kommunikationsparameter K1, wenn die Bedingung Kennung 140 = Kennung 116 erfüllt ist, da nur dann der Schlüssel S1, der für die symmetrische Verschlüsselung verwendet worden ist, gleich dem Schlüssel S2 sein kann, welcher für die symmetrische Entschlüsselung des Chiffrats des Kommunikationsparameters K1 verwendet wurde.

Durch den Kommunikationsparameter K2 kann ein zweiter Kommunikationskanal 146 definiert sein, indem nämlich das Kommunikationsmodul 134 mit dem Kommunikationsparameter K2 auf seine Zuordnungstabelle zugreift. Dieser zweite Kommunikationskanal 146 ist wiederum nur dann identisch mit dem ersten Kommunikationskanal 112, wenn die Bedingung Kennung 140 = Kennung 116 erfüllt ist.

Nach der Übertragung des Chiffrats des Kommunikationsparameters K1 über den vordefinierten Kommunikationskanal 108 generiert das Chipkarten-Terminal 104 das ChipkartenKommando 122, welches über den ersten Kommunikationskanal 112 von der Schnittstelle 106 an die Schnittstelle 102 gesendet wird.

Wenn der zweite Kommunikationskanal 146 mit dem ersten Kommunikationskanal 112 übereinstimmt, so wird das Chipkarten-Kommando 122 von der Chipkarte verarbeitet und die Chipkartenfunktion 120 wird aufgerufen. Als Ergebnis generiert die Chipkarte 100 eine Antwort auf das Chipkarten-Kommando 122 und überträgt diese Antwort über den ersten Kommunikationskanal 112 zurück an das Chipkarten-Terminal 100.

Wenn hingegen der zweite Kommunikationskanal 146 nicht identisch mit dem ersten Kommunikationskanal 112 ist, so ignoriert die Chipkarte das auf dem ersten Kommunikationskanal 112 empfangene Chipkarten-Kommando.

Beispielsweise ist der Kommunikationskanal 108 durch eine Übertragungsfrequenz von 9 GHz definiert, der Kommunikationskanal 112 durch eine Übertragungsfrequenz von 10 GHz und der Kommunikationskanal 146 durch eine Übertragungsfrequenz von 11GHz, wobei die Übertragungsfrequnzen der Kommunikationskanäle 112 und 146 voneinander abweichen, da die Kennungen 140 und 112 nicht übereinstimmen. Wenn das Chipkarten-Terminal 104 in diesem Fall ein Signal auf der Frequenz 10 GHz von dem Chipkartenterminal 100 empfängt, obwohl es einen Empfang auf der Frequenz 11 GHz erwartet hat, wird dieses Signal ignoriert. Dadurch ist eine implizite Überprüfung der Kennung 116 gegeben, ohne dass die Kennung 116 unmittelbar mit der Kennung 140 verglichen werden müsste, und ohne dass die Kennung 140 in dem Chipkarten-Terminal gespeichert sein muss.

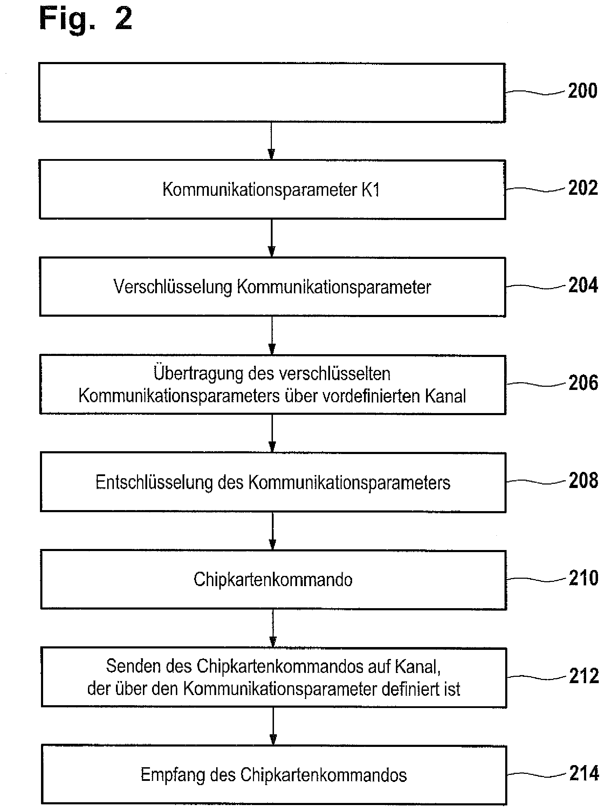

Die Figur 2 zeigt ein entsprechendes Flussdiagramm, in dem Schritt 200 wird die Kennung 116 in der Chipkarte gelesen. Daraufhin wird in dem Schritt 202 durch den Chipkarte 100 der Kommunikationsparameter K1 zur Auswahl eines der Kommunikationskanäle aus der Menge der Kommunikationskanäle festgelegt. In dem Schritt 204 wird der Kommunikationsparameter K1 mit Hilfe der Kennung 116 symmetrisch verschlüsselt. Dies kann so erfolgen, dass aus der Kennung 116 mit Hilfe eines Schlüsselgenerators der symmetrische Schlüssel S1 abgeleitet wird, der dann zur Verschlüsselung des Kommunikationsparameters K1 dient.

In dem Schritt 206 wird das mit Hilfe des Schlüssels S1 erzeugte Chiffrat des Kommunikationsparameters K1 über einen vordefinierten Kommunikationskanal von der Chipkarte an das Chipkarten-Terminal übertragen.

Das Chipkarten-Terminal 104 unternimmt in dem Schritt 208 den Versuch einer Entschlüsselung des Kommunikationsparameters K1 auf der Basis der Kennung 140. Die zutreffende Kennung 140 kann in einem geschützten Speicherbereich des Chipkarten-Terminals gespeichert sein, und wird zur Ableitung eines symmetrischen Schlüssels S2 verwendet. Alternativ kann auch unmittelbar der Schlüssel S2 in dem geschützten Speicherbereich des Chipkarten-Terminals gespeichert sein.

Die Entschlüsselung des Chiffrats des Kommunikationsparameters K1 mit dem Schlüssel S2 hat einen Kommunikationsparameter K2 zum Ergebnis. Durch diesen Kommunikationsparameter K2 kann ein zweiter Kommunikationskanal der Menge definiert sein. Nur wenn die die Kennung 116 zutreffend ist, d.h. wenn die Bedingung Kennung 116 = Kennung 140 erfüllt ist, sind die durch die Kommunikationsparameter K1 und K2 spezifizierten Kommunikationskanäle identisch.

In dem Schritt 210 generiert das Terminal ein Chipkarten-Kommando und sendet dies über den ersten, durch den Kommunikationsparameter K2 spezifizierten Kommunikationskanal an die Chipkarte (Schritt 212). In dem Schritt 214 kann die Chipkarte das ChipkartenKommando nur dann empfangen, wenn der zweite Kommunikationskanal, auf den das Chipkarten-Terminal zum Empfang eingerichtet ist, identisch mit dem ersten Kommunikationskanal ist, d.h. wenn die Bedingung Kennung 116 = Kennung 140 erfüllt ist. Im gegenteiligen Fall ignoriert die Chipkarte das auf dem ersten Kommunikationskanal empfangene Chiffrat.

Der Kommunikationsparameter K1 umfasst einen öffentlichen Schlüssel der Chipkarte. Das Chiffrat dieses öffentlichen Schlüssels, das mit Hilfe des Schlüssels S1 durch symmetrische Verschlüsselung generiert worden ist, wird von der Chipkarte an das Chipkarten-Terminal übertragen. Das Chipkarten-Terminal empfängt nur dann den korrekten öffentlichen Schlüssel der Chipkarte, wenn wiederum die Bedingung Kennung 116 = Kennung 140 erfüllt ist, da nur dann die Entschlüsselung des Chiffrats mit Hilfe des Schlüssels S2 gelingt (vergleiche die Ausführungsform der Figur 1).

Es sei an dieser Stelle darauf verwiesen, dass der Kommunikationsparameter ein einziges verschlüsseltes Datenpaket umfassen kann, oder aber eine Ansammlung mehrerer einzeln mit S1 verschlüsselter Datenpakete. Im letzteren Fall können diese einzeln verschlüsselt physikalische und logische Kanalinformationen, sowie den öffentlichen Schlüssel oder allgemein die kryptografische Information aufweisen.

Aus dem privaten Schlüssel der Chipkarte und dem öffentlichen Schlüssel des Chipkarten-Terminals kann die Chipkarte z.B. nach dem Diffie-Hellman-Verfahren einen symmetrischen Schlüssel S3 ableiten. Dementsprechend kann das Chipkarten-Terminal aus dem öffentlichen Schlüssel der Chipkarte und seinem privaten Schlüssel ebenfalls nach dem DiffieHellman-Verfahren einen symmetrischen Schlüssel S4 ableiten. Die Schlüssel S3 und S4 sind identisch, wenn die Bedingung Kennung 116 = Kennung 140 erfüllt ist.

Der erste Kommunikationskanal (vergleiche Kommunikationskanal 112 der Figur 1) ist gemäß der Erfindung ergänzend über die symmetrischen Schlüssel S3 = S4 definiert, indem eine nachfolgende Kommunikation zwischen Chipkarte und Terminal mit diesen Schlüsseln verschlüsselt erfolgt. Die in dem Kommunikationsparameter K1 spezifizierte physikalischen und logischen Kanalinformation kann dabei verwendet werden.

Das von der Chipkarte an das Chipkarten-Terminal gesendete Chipkarten-Kommando wird mit dem symmetrischen Schlüssel S3 verschlüsselt, und kann nur dann von dem Chipkarten-Terminal entschlüsselt, d.h. empfangen werden, wenn sich das Chipkarten-Kommando mit Hilfe des Schlüssels S4 entschlüsseln lässt. Andernfalls wird das ChipkartenKommando ignoriert.

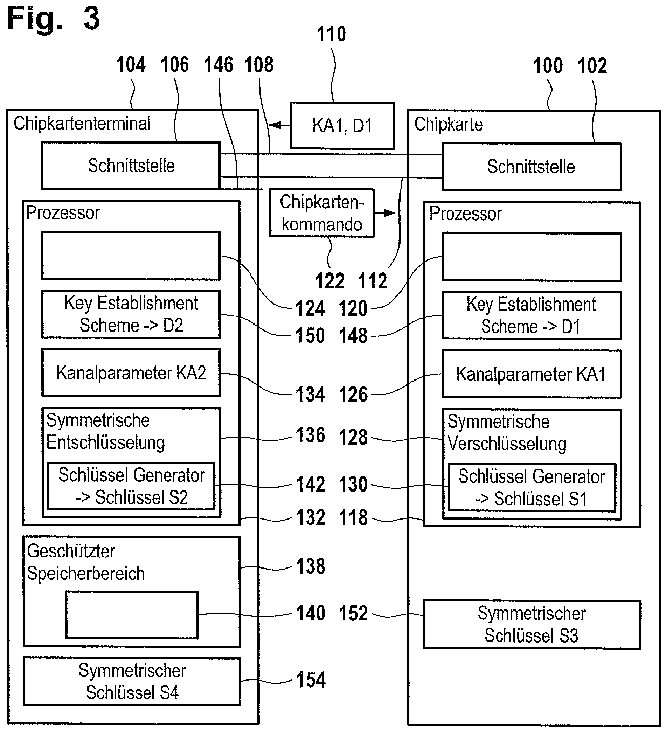

Die Figur 3 zeigt ein Chipkarten-Terminal und eine Chipkarte, wobei z.B. ein Verfahren zur diskreten logarithmischen Kryptographie für die Generierung der Schlüssel S3 bzw. S4 zur Anwendung kommt, wobei es sich bei der kryptografischen Information um Domainparameter handelt.

Ergänzend zu der Ausführungsform gemäß Figur 1 dient der Prozessor 118 zur Ausführung von Programminstruktionen 148, durch welche ein so genanntes Key Establishment Scheme für die Generierung des symmetrischen Schlüssels S3 gegeben ist.

Das Key Establishment Scheme arbeitet nach einem Verfahren der diskreten logarithmischen Kryptographie (DLC), insbesondere der elliptischen Kurvenkryptographie (EEC), vorzugsweise nach einem elliptischen Kurven-Diffie-Hellman-Verfahren (ECDH). Zur Generierung des symmetrischen Schlüssels S3 erzeugen die Programminstruktionen 148 zunächst erste Domainparameter, die im Weiteren als D1 bezeichnet werden.

Zusätzlich kann das Kommunikationsmodul 126 einen ersten Kanalparameter KA1 erzeugen oder aus einer vorgegebenen Liste auslesen, welcher zum Beispiel die physikalischen Eigenschaften des ersten Kommunikationskanals spezifiziert. Der erste Kanalparameter KA1 entspricht dem Kanalparameter K1 in der Ausführungsform der Figur 1.

Die Domainparameter D1 und der oder die Kanalparameter KA1 werden mit Hilfe des Schlüssels S1 durch die Programminstruktionen 128 verschlüsselt. Das aus KA1, D1 mit Hilfe des Schlüssels S1 gewonnene Chiffrat 110 wird über den vordefinierten Kommunikationskanal 108 von der Schnittstelle 102 zu der Schnittstelle 106 übertragen.

Das Chipkarten-Terminal 104 entschlüsselt das Chiffrat 110 mit Hilfe des symmetrischen Schlüssels S2. Als Resultat der Entschlüsselung erhält das Chipkarten-Terminal 104 den zweiten Kanalparameter KA2, der dem Kommunikationsparameter K2 in der Ausführungsform der Figur 1 entspricht. Ferner erhält das Chipkarten-Terminal den oder die Domainparameter D2. Der Kanalparameter KA2 wird durch das Kommunikationsmodul 134 verarbeitet, um beispielsweise die physikalische Spezifizierung des zweiten Kommunikationskanals 146 festzustellen.

Das Chipkarten-Terminal 104 hat ergänzend zu der Ausführungsform der Figur 1 Programminstruktionen 150, die in ihrer Funktionalität den Programminstruktionen 148 entsprechen, und durch die chipkartenseitig das Key Establishment Scheme implementiert wird.

Seitens der Chipkarte wird durch Ausführung der Programminstruktionen 148 aus den Domainparametern D1 der symmetrische Schlüssel S3 abgeleitet, der in einem Speicher 152 des Chipkartes 100 abgelegt wird. Dementsprechend wird durch Ausführung der Programminstruktionen 150 seitens dem Chipkarten-Terminal 104 aus den Domainparametern D2 ein symmetrischer Schlüssel S4 abgeleitet, der in einen Speicher 154 dem ChipkartenTerminal 104 abgelegt wird.

Das Chipkarten-Kommando 122 wird vor seiner Versendung durch das Terminal mit dem symmetrischen Schlüssel S4 verschlüsselt und dann über den durch die Kanalparameter KA2 spezifizierten Kommunikationskanal übertragen. Ein Empfang des Chipkarten-Kommandos 122 durch die Chipkarte 100 ist nur möglich, wenn sowohl KA2 = KA1 und D2 = D1 ist, was wiederum nur dann möglich ist, wenn die Bedingung Kennung 116 = Kennung 140 erfüllt ist.

Von besonderem Vorteil ist hier, dass die Übertragung der Domainparameter D1 über den vordefinierten Kommunikationskanal 108 durch einen Dritten nicht ausgespäht werden kann, da die Übertragung der Domainparameter D1 in einer verschlüsselten Form erfolgt.

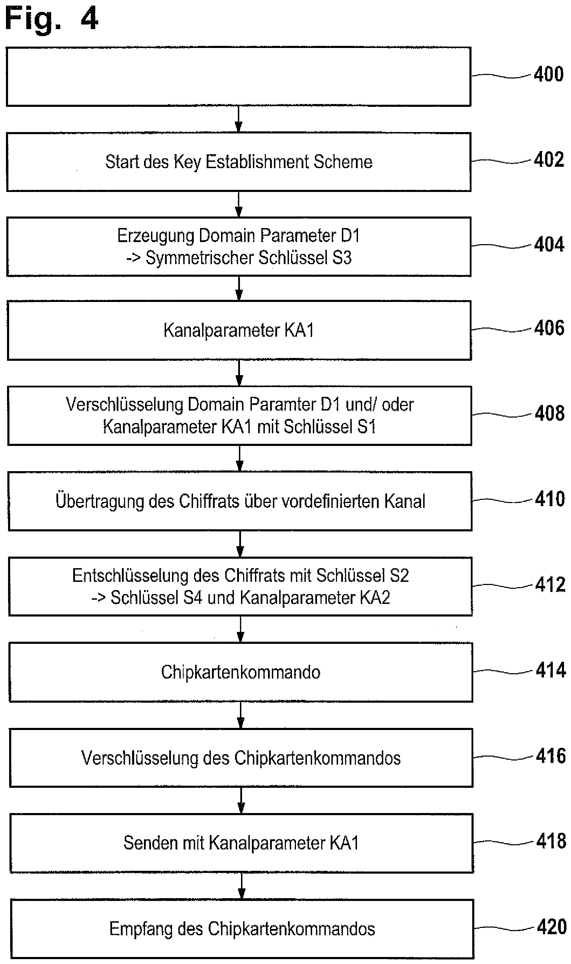

Die Figur 4 zeigt ein entsprechendes Flussdiagramm. In dem Schritt 400 wird aus einer ersten Kennung der symmetrische Schlüssel S1 abgeleitet.

In dem Schritt 402 wird das Key Establishment Scheme gestartet. Daraufhin wird in dem Schritt 404 ein Satz Domainparameter D1 erzeugt. Mit Hilfe der Domainparameter D1 wird der symmetrische Schlüssel S3 durch die Chipkarte generiert. Ferner werden in dem Schritt 406 durch die Chipkarte der Kanalparameter KA1 generiert oder aus einer vorgegebenen Liste ausgelesen.

In dem Schritt 408 werden die Domainparameter D1 und/oder die Kanalparameter KA1 mit dem Schlüssel S1 verschlüsselt. Beispielsweise werden die Domainparameter D1 und die Kanalparameter KA1 aneinander gehängt, woraus ein einziger Kommunikationsparameter resultiert, der dann mit dem Schlüssel S1 verschlüsselt wird. Alternativ werden nur die Domainparameter D1 oder nur die Kanalparameter KA1 oder eine jeweilige Teilmenge der Domain- und/oder Kanalparameter mit dem Schlüssel S1 verschlüsselt. Das aus der Verschlüsselung mit dem Schlüssel S1 resultierende Chiffrat sowie gegebenenfalls verbleibende unverschlüsselten Domain- und/oder Kanalparameter werden in dem Schritt 410 von der Chipkarte an das Chipkarten-Terminal über den vordefinierten Kanal (vergleiche Kommunikationskanal 108 der Figuren 1 und 3) übertragen.

In dem Schritt 412 versucht das Chipkarten-Terminal das Chiffrat mit Hilfe des Schlüssels S2 zu entschlüsseln. Daraus erhält das Chipkarten-Terminal 104 die Kanalparameter KA2 und die Domainparameter D2. Aus den Domainparametern D2 leitet das ChipkartenTerminal 104 den Schlüssel S4 ab.

In dem Schritt 414 generiert das Terminal 104 ein Chipkarten-Kommando, welches mit dem Schlüssel S4 verschlüsselt wird (Schritt 416), um dieses über den durch die Kanalparameter KA2 definierten ersten Kommunikationskanal zu übertragen (vergleiche Kommunikationskanal 112 in den Ausführungsformen der Figuren 1 und 3). Das Terminal versendet das Chipkarten-Kommando in dem Schritt 418.

Ein korrekter Empfang dieses Chiffrats durch die Chipkarte ist in dem Schritt 420 nur dann möglich, wenn der zweite Kommunikationskanal 146 mit dem ersten Kommunikationskanal 112 übereinstimmt, d.h. wenn KA2 = KA1 ist, und wenn außerdem eine Entschlüsselung des Chipkarten-Kommandos mit dem Schlüssel S4 möglich ist, d.h. wenn S4 = S3 ist. Die Bedingungen KA2 = KA1 und S4 = S3 können aber nur dann erfüllt sein, wenn Kennung 116 = Kennung 140 ist.

Es gibt verschiedene Zugangs- oder Identifikationssysteme auf der Basis kontaktloser Karten, so zum Beispiel Legic, Mifare, Hitag. Diese Systeme sind zwar weit verbreitet, aber die Spezifikationen ihrer Funktionsweise und damit ihrer Sicherheit sind Firmengeheimnisse der Hersteller. Mit der Einführung des Protokolls PACE (Password Authentication Connection Establishment) im deutschen Personalausweis und im elektronischen Aufenthaltstitel gibt es ein öffentlich bekanntes Protokoll für die Authentisierung einer Umgebung (eines Hintergrundsystems mit Kartenlesern für kontaktlose Karten) gegenüber einer kontaktlosen Karte, das auch in Halbleitern und Kartenbetriebssystemen implementiert ist.

Bisher wird PACE nur einseitig zur Authentisierung der Umgebung gegen die Karte verwendet. Dabei wird der Schlüssel für das PACE-Protokoll von einem PACE-Passwort abgeleitet, das von einer beteiligten Person als Zustimmung für die Authentisierung eingegeben werden muss.

Durch das obig beschriebene Verfahren ergibt es ein öffentlich bekanntes und geprüftes Verfahren, das sich als Alternative zu den proprietären Verfahren der oben genannten Hersteller anbietet. Dadurch ist es möglich, zertifizierte Produkte für den Zugang und zur Identifikation mit kontaktlosen Karten anzubieten.

### Bezugszeichenliste

- 100: Chipkarte
- 102: Schnittstelle
- 104: Chipkarte
- 106: Schnittstelle
- 108: vordefinierter Kommunikationskanal
- 110: Kommunikationsparameter
- 112: erster Kommunikationskanal
- 116: Kennung
- 118: Prozessor
- 120: Chipkartenfunktion
- 122: Chipkarten-Kommando
- 124: Anwendungsprogramm
- 126: Kommunikationsmodul
- 128: Programminstruktionen
- 130: Schlüsselgenerator
- 132: Prozessor
- 134: Kommunikationsmodul
- 136: Programminstruktionen
- 138: geschützter Speicherbereich
- 140: Kennung
- 142: Schlüsselgenerator
- 146: zweiter Kommunikationskanal
- 148: Programminstruktionen
- 150: Programminstruktionen
- 152: Speicher
- 154: Speicher

## Patentansprüche

1. Verfahren zum wechselseitigen Schutz einer Chipkarte (100) und wenigstens einer Umgebung der Chipkarte (100) gegen unberechtigte Benutzung, wobei die Umgebung ein Chipkarten-Terminal (104) aufweist, wobei die Chipkarte eine erste Kennung (116) aufweist, wobei das Verfahren die folgenden Schritte einer Umgebungs-Authentifizierung aufweist:
- Erzeugung eines Chiffrats aus zumindest einem ersten Kommunikationsparameter (K1; KA1, D1) mit Hilfe eines aus der ersten Kennung abgeleiteten ersten symmetrischen Schlüssels (S1), wobei mit Hilfe des Kommunikationsparameters ein geschützter erster Kommunikationskanal (112) zwischen dem Chipkarten-Terminal und der Chipkarte definierbar ist,
- Übertragung des Chiffrats über einen vordefinierten Kommunikationskanal (108) von der Chipkarte an das Chipkarten-Terminal,
- Versuch einer Entschlüsselung des Chiffrats mit Hilfe eines zweiten symmetrischen Schlüssels (S2) durch das Chipkarten-Terminal (104), wobei das Resultat der Entschlüsselung nur dann der erste Kommunikationsparameter ist, wenn der erste symmetrische Schlüssel dem zweiten symmetrischen Schlüssel gleicht, sodass der geschützte erste Kommunikationskanal nur dann zwischen dem Chipkarten-Terminal und der Chipkarte definierbar ist, wenn die erste Kennung (116) zutreffend ist, wobei der erste Kommunikationsparameter (K1; KA1, D1) eine kryptografische Information der Chipkarte umfasst, wobei das Chipkarten-Terminal im Fall, dass die Entschlüsselung des Chiffrats gelingt, aus der kryptografische Information einen weiteren symmetrischen Schlüssel (S4) zur Verschlüsselung der Kommunikation zwischen dem Chipkarten-Terminal und der Chipkarte ableitet, wobei durch die Verschlüsselung mit dem weiteren symmetrischen Schlüssel (S4) eine erfolgreiche Authentifizierung der Chipkarte gegenüber der Umgebung erfolgt ist.

2. Verfahren nach Anspruch 1, wobei die kryptografische Information einen ersten Domainparameter (D1) für die Durchführung eines diskreten logarithmischen kryptographischen Verfahrens zur Erzeugung eines dritten symmetrischen Schlüssels (S3) durch die Chipkarte und des vierten symmetrischen Schlüssels (S4) durch das Chipkarten-Terminal umfasst, wobei die dritten und vierten Schlüssel identisch sind, wenn die erste Kennung zutreffend ist, wobei die dritten und vierten symmetrische Schlüssel zur Verschlüsselung der Kommunikation zwischen dem ChipkartenTerminal und der Chipkarte über den geschützten ersten Kommunikationskanal vorgesehen sind.

3. Verfahren nach Anspruch 2, wobei es sich bei dem diskreten logarithmischen kryptographischen Verfahren um ein elliptische Kurven kryptographisches Verfahren handelt

4. Verfahren nach Anspruch 2 oder 3, wobei es sich bei dem diskreten logarithmischen kryptographischen Verfahren um ein elliptisches Kurven DiffieHellman-Verfahren handelt.

5. Verfahren nach einem der vorhergehenden Ansprüche, wobei auf dem ChipkartenTerminal eine zweite Kennung (140) gespeichert ist, aus der der zweite Schlüssel (S2) ableitbar ist.

6. Verfahren nach einem der vorhergehenden Ansprüche, wobei der zweite Schlüssel (S2) in einem geschützten nicht-volatilen Speicherbereich des Chipkarten-Terminals gespeichert ist.

7. Chipkarten-Terminal (104), mit
- einer Schnittstelle (106) zur Kommunikation über einen vordefinierten Kommunikationskanal (108) und mehreren weiteren Kommunikationskanälen (112, 146, ...) mit einer Chipkarte (100), wobei das Chipkarten-Terminal (104) wenigstens einer Umgebung zugeordnet ist,
- Mitteln (132, 136) zur Entschlüsselung eines auf dem vordefinierten Kanal (108) empfangenen Chiffrats, welches mit Hilfe eines ersten symmetrischen Schlüssels (S1) verschlüsselt ist, mit Hilfe eines zweiten symmetrischen Schlüssels (S2), wobei die Entschlüsselung zumindest einen Kommunikationsparameter ergibt (K2; KA2, D2), wenn eine auf der Chipkarte gespeicherte erste Kennung (116) zutreffend ist, wobei durch den Kommunikationsparameter einer der weiteren Kommunikationskanäle für die geschützte Kommunikation zwischen der Chipkarte und dem Chipkarten-Terminal der Umgebung eindeutig festgelegt ist.

8. Chipkarten-Terminal (104) nach Anspruch 7, wobei der erste Kommunikationsparameter einen öffentlichen Schlüssel und/oder einen Domainparameter umfasst, und mit Mitteln (132) zur Durchführung eines Diffie-Hellman-Verfahrens zur Ableitung eines weiteren symmetrischen Schlüssels (S4) mit Hilfe des öffentlichen Schlüssels und/oder des Domainparameters.

9. Chipkarten-Terminal (104) nach Anspruch 7 oder 8, mit Mitteln (150) zur Durchführung eines diskreten logarithmischen Verschlüsselungsverfahrens zur Erzeugung des weiteren symmetrischen Schlüssels (S4), wobei der weitere symmetrische Schlüssel zur symmetrischen Verschlüsselung der Kommunikation zwischen dem Chipkarten-Terminal und der Chipkarte über den festgelegten Kommunikationskanal (112) vorgesehen ist.

10. Chipkarten-Terminal (104) nach einem der vorhergehenden Ansprüche 7 bis 9, mit einem nicht flüchtigen geschützten Speicherbereich zur Speicherung einer zweiten Kennung (140), aus der der zweite Schlüssel ableitbar ist.

11. Chipkarten-Terminal (104) nach einem der vorhergehenden Ansprüche 7 bis 10, mit einem geschützten nicht-flüchtigen Speicherbereich zur Speicherung des zweiten Schlüssels.

12. Auf wenigstens eine Umgebung eines Chipkarten-Terminals (104) bezogene Chipkarte (100) mit einer ersten Kennung (116), und
- Mitteln zur Erzeugung eines Chiffrats aus zumindest einem ersten Kommunikationsparameter (K1; KA 1, 01) mit Hilfe eines aus der ersten Kennung abgeleiteten ersten umgebungsbezogenen symmetrischen Schlüssels (S1), wobei mit Hilfe des Kommunikationsparameters ein geschützter erster Kommunikationskanal (112) zwischen dem Chipkarten-Terminal der und der Chipkarte (100) der Umgebung definierbar ist, wobei die Chipkarte für jede Umgebung jeweils eine erste Kennung (116) gespeichert hat, aus welcher der erste umgebungsbezogene symmetrische Schlüssel (S1) ableitbar ist,
- Mitteln zum Senden des Chiffrats über einen vordefinierten Kommunikationskanal (108) an das Chipkarten-Terminal.

13. Chipkarte (100) nach Anspruch 12, ferner mit einem Speicherbereich für Sperrdaten, wobei die Chipkarte gesperrt ist, wenn die Sperrdaten einen vordefinierten Wert aufweisen, wobei die Chipkarte zum Empfang der Sperrdaten von dem ChipkartenTerminal ausgebildet ist.

14. Chipkarte nach einem der vorhergehenden Ansprüche 12 bis 13, wobei es sich bei der Chipkarte um ein Dokument, insbesondere ein Wert- oder Sicherheitsdokument, um eine Ausweiskarte, ein Zahlungsmittel, eine Signaturkarte, eine Skiliftkarte, eine Hotelkarte oder dergleichen handelt.

15. Computerprogrammprodukt mit von einem Prozessor ausführbaren Instruktionen, die bei Ausführung durch den Prozessor diesen veranlassen zur Durchführung der Schritte gemäß dem Verfahren nach einem der vorigen Ansprüche 1 bis 6.

16. Signalfolge, die, wenn in einem Computer abgespeichert, eine Abfolge von Instruktionen darstellt, die, wenn auf diesem Computer ausgeführt, das Verfahren nach einem der vorigen Ansprüche 1 bis 6 ausführt.

## Claims

1. A method for two-way protection of a chip card (100) and at least one environment of the chip card (100) against unauthorized use, wherein the environment contains a chip card terminal (104), wherein the chip card has a first identifier (116), wherein the method has the following environment authentication steps:
- generating a ciphertext from at least one first communication parameter (K1; KA1, D1) using a first symmetric key (S1) derived from the first identifier, wherein a protected first communication channel (112) between the chip card terminal and the chip card is definable using the communication parameter,
- transmitting the ciphertext from the chip card to the chip card terminal over a predefined communication channel (108), and
- attempting a decryption of the ciphertext using a second symmetric key (S2) by means of the chip card terminal (104), wherein the result of the decryption is the first communication parameter only if the first symmetric key equals the second symmetric key, and therefore the protected first communication channel is definable between the chip card terminal and the chip card only if the first identifier (116) is correct, wherein the first communication parameter (K1; KA1, D1) comprises cryptographic information of the chip card, wherein, in the event that the decryption of the ciphertext is successful, the chip card terminal derives a further symmetric key (S4) from the cryptographic information in order to encrypt the communication between the chip card terminal and the chip card, wherein the chip card is successfully authenticated to the environment by way of the encryption with the further symmetric key (S4).

2. The method according to claim 1, wherein the cryptographic information includes a first domain parameter (D1) for performing a discrete logarithmic cryptographic method for generating a third symmetric key (S3) by the chip card and the fourth symmetric key (S4) by the chip card terminal, wherein the third and fourth keys are identical if the first identifier is correct, wherein the third and fourth symmetric keys are provided in order to encrypt the communication between the chip card terminal and the chip card over the protected first communication channel.

3. The method according to claim 2, wherein the discrete logarithmic cryptographic method is an elliptic-curve cryptographic method.

4. The method according to claim 2 or 3, wherein the discrete logarithmic cryptographic method is an elliptic-curve Diffie-Hellman method.

5. The method according to any one of the preceding claims, wherein a second identifier (140), from which the second key (S2) may be derived, is stored on the chip card terminal.

6. The method according to any one of the preceding claims, wherein the second key (S2) is stored in a protected non-volatile memory region of the chip card terminal.

7. A chip card terminal (104) comprising
- an interface (106) for communication with a chip card (100) over a predefined communication channel (108) and a plurality of further communication channels (112, 146, ...), wherein the chip card terminal (104) is associated with at least environment,
- means (132, 136) for decrypting a ciphertext, which is received on the predefined channel (108) and which is encrypted using a first symmetric key (S1), using a second symmetric key (S2), wherein the decryption results in at least one communication parameter (K2; KA2, D2) if a first identifier (116) stored on the chip card is correct, wherein one of the further communication channels for the protected communication between the chip card and the chip card terminal of the environment is defined unambiguously by the communication parameter.

8. The chip card terminal (104) according to claim 7, wherein the first communication parameter comprises a public key and/or a domain parameter, and comprising means (132) for carrying out a Diffie-Hellman method to derive a further symmetric key (S4) using the public key and/or the domain parameter.

9. The chip card terminal (104) according to claim 7 or 8, comprising means (150) for carrying out a discrete logarithmic encryption method in order to generate the further symmetric key (S4), wherein the further symmetric key is provided for symmetric encryption of the communication between the chip card terminal and the chip card over the defined communication channel (112).

10. The chip card terminal (104) according to any one of preceding claims 7 to 9, comprising a non-volatile protected memory region for storing a second identifier (140), from which the second key may be derived.

11. The chip card terminal (104) according to any one of preceding claims 7 to 10, comprising a protected non-volatile memory region for storing the second key.

12. A chip card (100) based on at least one environment of a chip card terminal (104) and comprising a first identifier (116) and
- means for generating a ciphertext from at least a first communication parameter (K1; KA1, 01) using a first environment-based symmetric key (S1) derived from the first identifier, wherein a protected first communication channel (112) between the chip card terminal and the chip card (100) of the environment is definable using the communication parameter, wherein the chip card has stored, for each environment, a first identifier (116), from which the first environment-based symmetric key (S1) may be derived,
- means for sending the ciphertext to the chip card terminal over a predefined communication channel (108).

13. The chip card (100) according to claim 12, further comprising a memory region for locking data, wherein the chip card is locked if the locking data have a predefined value, wherein the chip card is configured to receive the locking data from the chip card terminal.

14. The chip card according to any one of preceding claims 12 to 13, wherein the chip card is a document, in particular a value or security document, an identity card, a payment means, a signature card, a ski lift card, a hotel room card or the like.

15. A computer program product comprising instructions executable by a processor which, when executed by the processor, prompt it to carry out the steps according to the method according to any one of preceding claims 1 to 6.

16. A signal sequence which, when stored in a computer, represents a sequence of instructions which, when run on this computer, performs the method according to any one of preceding claims 1 to 6.

## Revendications

1. Procédé de protection réciproque d'une carte à puce (100) et d'au moins un environnement de la carte à puce (100) contre une utilisation non autorisée, dans lequel l'environnement présente un terminal de carte à puce (104), où la carte à puce présente un premier identifiant (116), le procédé présentant les étapes suivantes pour une authentification de l'environnement :
- création d'un élément chiffré à partir d'au moins un premier paramètre de communication (K1 ; KA1, D1) à l'aide d'une première clé (S1) symétrique dérivée du premier identifiant, où, avec l'aide du paramètre de communication, un premier canal de communication (112) protégé peut être défini entre le terminal de carte à puce et la carte à puce,
- transmission de l'élément chiffré par le biais d'un canal de communication prédéfini (108) de la carte à puce vers le terminal de la carte à puce,
- essai de déchiffrement de l'élément chiffré à l'aide d'une deuxième clé symétrique (S2) par le terminal de carte à puce (104), où le résultat du déchiffrement n'est le premier paramètre de communication que si la première clé symétrique ressemble à la deuxième clé symétrique, de sorte que le premier canal de communication protégé ne peut être défini entre le terminal de carte à puce et la carte à puce que lorsque le premier identifiant (116) est applicable, où le premier paramètre de communication (K1 ; KA1, D1) comprend une information cryptographique de la carte à puce, où le terminal de carte à puce, dans le cas où le déchiffrement de l'élément chiffré réussit, dérive une nouvelle clé symétrique (S4) à partir de l'information cryptographique pour le chiffrement de la communication entre le terminal de carte à puce et la carte à puce, où, par le chiffrement avec la nouvelle clé symétrique (S4), une authentification réussie de la carte à puce vis-à-vis de l'environnement a eu lieu.

2. Procédé selon la revendication 1, dans lequel l'information cryptographique comprend un premier paramètre de domaine (D1) pour l'exécution d'un procédé cryptographique logarithmique discret pour la création d'une troisième clé symétrique (S3) par la carte à puce et de la quatrième clé symétrique (S4) par le terminal de carte à puce, dans lequel les troisième et quatrième clés sont identiques lorsque le premier identifiant est applicable, dans lequel les troisième et quatrième clés symétriques sont prévues pour le chiffrement de la communication entre le terminal de carte à puce et la carte à puce par le biais du premier canal de communication protégé.

3. Procédé selon la revendication 2, dans lequel, dans le cas du procédé cryptographique logarithmique discret, il s'agit d'un procédé cryptographique sur les courbes elliptiques.

4. Procédé selon la revendication 2 ou la revendication 3, dans lequel, dans le cas du procédé cryptographique logarithmique discret, il s'agit d'un procédé cryptographique sur les courbes elliptiques de Diffie Hellman.

5. Procédé selon l'une des revendications précédentes, dans lequel un deuxième identifiant (140) est enregistré sur le terminal de carte à puce, à partir duquel la deuxième clé (S2) peut être dérivée.

6. Procédé selon l'une des revendications précédentes, dans lequel la deuxième clé (S2) est enregistrée dans une zone de mémoire non volatile protégée du terminal de carte à puce.

7. Terminal de carte à puce (104) pourvu
- d'une interface (106) permettant la communication par le biais d'un canal de communication prédéfini (108) et de plusieurs autres canaux de communication (112, 146, ...) avec une carte à puce (100), où le terminal de carte à puce (104) est associé au moins à un environnement,
- de moyens (132, 136) permettant le déchiffrement d'un élément chiffré reçu sur le canal prédéfini (108), lequel est chiffré à l'aide d'une première clé symétrique (S1), à l'aide d'une deuxième clé symétrique (S2), où le déchiffrement a pour résultat au moins un paramètre de communication (K2 ; KA2,D2) lorsqu'un premier identifiant (116) enregistré sur la carte à puce est applicable, où, par le paramètre de communication, un des autres canaux de communication pour la communication protégée entre la carte à puce et le terminal de carte à puce de l'environnement est fixé de manière précise.

8. Terminal de carte à puce (104) selon la revendication 7, dans lequel le premier paramètre de communication comprend une clé publique et/ou un paramètre de domaine et est pourvu de moyens (132) pour l'exécution d'un procédé de Diffie Hellman pour la dérivation d'une nouvelle clé publique (S4) à l'aide de la clé publique et/ou du paramètre de domaine.

9. Terminal de carte à puce (104) selon la revendication 7 ou la revendication 8, avec des moyens (150) pour l'exécution d'un procédé de chiffrement logarithmique discret pour la création d'une nouvelle clé symétrique (S4), où la nouvelle clé symétrique est prévue pour le chiffrement symétrique de la communication entre le terminal de carte à puce et la carte à puce par le biais du canal de communication (112) établi.

10. Terminal de carte à puce (104) selon l'une des revendications précédentes 7 à 9, avec une zone de mémoire protégée non volatile permettant l'enregistrement d'un deuxième identifiant (140) dérivable à partir de la deuxième clé.

11. Terminal de carte à puce (104) selon l'une des revendications précédentes 7 à 10, avec une zone de mémoire protégée non volatile permettant l'enregistrement de la deuxième clé.

12. Carte à puce (100) concernant au moins un environnement d'un terminal de carte à puce (104), avec un premier identifiant (116), et
- des moyens de création d'un élément chiffré à partir d'au moins un premier paramètre de communication (K1 ; KA1, D1) à l'aide d'une première clé symétrique (S1) concernant l'environnement, dérivée à partir du premier identifiant, où, à l'aide du paramètre de communication, un premier canal de communication (112) protégé peut être défini entre le terminal de carte à puce de la carte à puce et la carte à puce (100) de l'environnement, où la carte à puce pour chaque environnement possède respectivement un premier identifiant (116) à partir duquel la première clé symétrique (S1) concernant l'environnement peut être dérivée,
- des moyens permettant l'envoi de l'élément chiffré au terminal de carte à puce par le biais d'un canal de communication (108) prédéfini.

13. Carte à puce (100) selon la revendication 12, pourvue en outre d'une zone de mémoire pour des données de blocage, où la carte à puce est bloquée si les données de blocage présentent une valeur prédéfinie, où la carte à puce est conçue pour la réception des données de blocage par le terminal de carte à puce.

14. Carte à puce selon l'une des revendications précédentes 12 à 13, où il s'agit, dans le cas de la carte à puce, d'un document, notamment d'un document de valeur ou de sécurité, d'une carte d'identité, d'un moyen de paiement, d'une carte de signature, d'une carte de remontées mécaniques, d'une carte d'hôtel ou similaire.

15. Produit-programme informatique pourvu d'instructions exécutables par un processeur, qui, lors d'une exécution par le processeur, font en sorte que celui-ci exécute les étapes d'après le procédé selon l'une des revendications précédentes 1 à 6.

16. Suite de signaux qui, lorsqu'elle est enregistrée dans un ordinateur, représente une suite d'instructions qui, lorsqu'elle est exécutée sur cet ordinateur, exécute le procédé selon l'une des revendications 1 à 6.
